(19) Europäisches Patentamt
European Patent Office
Office européen des brevets

(11) **EP 4 390 362 A1**

(12) **EUROPEAN PATENT APPLICATION**

(43) Date of publication:
**26.06.2024 Bulletin 2024/26**

(21) Application number: **22216638.1**

(22) Date of filing: **23.12.2022**

(51) International Patent Classification (IPC):
*G01N 1/06* (2006.01)    *G06T 1/00* (2006.01)

(52) Cooperative Patent Classification (CPC):
**G01N 1/06**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Leica Microsystems CMS GmbH
35578 Wetzlar (DE)**
• **Leica Mikrosysteme GmbH
1170 Wien (AT)**

(72) Inventors:
• **HECHT, Frank
35578 Wetzlar (DE)**
• **WURZINGER, Paul
1170 Wien (AT)**
• **KATZENGRUBER, Matthias
1170 Wien (AT)**

(74) Representative: **Maiwald GmbH
Elisenhof
Elisenstraße 3
80335 München (DE)**

(54) **CONTROLLER FOR A MICROTOME, MICROTOME SYSTEM AND CORRESPONDING METHOD**

(57)     The invention relates to a controller for a microtome, wherein the microtome is configured to cut slices from a sample block by means of a knife, wherein said controller is configured to: Control a display (320) to visualize a virtual representation (340) of the sample block, Receive first user input data, wherein the first user input data is indicative of a front surface of the sample block in the virtual representation of the sample block, Determine a virtual front surface (342) of the sample block based on the first user input data, Receive second user input data, wherein the second input data is indicative of an edge (244) of the front surface of the sample block in the virtual representation (340) of the sample block, Determine a virtual edge (344) of the front surface of the sample block based on the second user input data, Receive third user input data (716), wherein the third user input data is indicative of a cutting plane intersecting the sample block in the virtual representation of the sample block, Determine a virtual cutting plane intersecting the sample block, based on the third user input, and Determine alignment parameters for the microtome, based on the virtual front surface (342) of the sample block, the virtual edge (344) of the front surface of the sample block, and the virtual cutting plane, wherein the alignment parameters define a relation between the virtual cutting plane, the virtual front surface of the sample block and the virtual edge of the front surface of the sample block.

**Fig. 3a**

EP 4 390 362 A1

## Description

### Technical Field

The present invention essentially relates to a controller for a microtome, to a microtome system comprising a microtome and such controller, and to a corresponding method.

### Background

In the field of neurosciences, but also in other fields of, e.g., biology and medicine, thin sections of tissues or other samples or microscopic samples can be examined by means of electron microscopes, for example. Such sections can be cut from a sample block by means of a microtome and then be placed on a sample carrier. The sample block is to be placed or arranged in a sample holder of the microtome. In order to cut samples (or slices) from the sample block as desired, the sample block has to be aligned with a knife of the microtome correctly. This can be difficult.

### Summary

In view of the situation described above, there is a need for improvement in aligning a sample block in a microtome. According to embodiments of the invention, a controller for a microtome, a microtome system, and a corresponding method with the features of the independent claims are proposed. Advantageous further developments form the subject matter of the dependent claims and of the subsequent description.

An embodiment of the invention relates to a controller for a microtome, wherein the microtome is configured to cut slices from a sample block (or specimen block) by means of a knife. In a typical microtome, the knife can be arranged in a knife holder of the microtome and the sample block can be arranged in a sample holder of the microtome. In an embodiment, the microtome is configured to change an orientation and/or position of the sample block relative to the knife in order to achieve a desired alignment between sample block and knife. In an embodiment, the microtome can comprise one or more actors for aligning the knife with the sample block, which actors can be controlled by or via the controller. In another embodiment, the microtome can be configured to allow manual alignment, e.g., based on instructions provided to a user.

Said controller is configured to control a display to visualize a virtual representation of the sample block, and to receive first user input data. The virtual representation of the sample block is, for example, a 3D representation of the sample block. The first user input data is indicative of a front surface of the sample block in the virtual representation of the sample block. Further, the controller is configured to determine a virtual front surface of the sample block based on the first user input data; it is noted that the virtual front surface can be determined in that a position and/or orientation of the virtual front surface are determined, in particular with respect to a coordinate system of the virtual representation of the sample block.

Further, the controller is configured to receive second user input data, wherein the second input data is indicative of an edge of the front surface of the sample block in the virtual representation of the sample block. Further, the control is configured to determine a virtual edge of the front surface of the sample block based on the second user input data; it is noted that the virtual edge of front surface can be determined in that a position and/or orientation of the virtual edge of the front surface are determined, in particular with respect to the coordinate system of the virtual representation of the sample block.

Further, the control is configured to receive third user input data, wherein the third user input data is indicative of a cutting plane (e.g., a plane along the knife shall cut through the sample block) intersecting the sample block in the virtual representation of the sample block. Further, the controller is configured to determine a virtual cutting plane intersecting the sample block, based on the third user input; it is noted that the virtual cutting plane can be determined in that a position and/or orientation of the virtual cutting plane are determined, in particular with respect to the coordinate system of the virtual representation of the sample block.

Further, the controller is configured to determine alignment parameters for the microtome, based on the virtual front surface of the sample block, the virtual edge of the front surface of the sample block, and the virtual cutting plane. The alignment parameters define a relation between the virtual cutting plane, the virtual front surface of the sample block and the virtual edge of the front surface of the sample block.

In this way, a virtual representation of the sample block can be provided (or shown) to a user and the user can easily define different features in the virtual representation of the sample block which are necessary for determining the alignment parameters, by simple user input like touching a touch display (if the display is a touch display) in order to achieve the correct and desired alignment.

In an embodiment of the invention, the controller is further configured to receive an image data set comprising multiple images, wherein the multiple images are obtained by volumetric imaging of the sample block, and to control the display to visualize the virtual representation of the sample block, based on the multiple images. In other words, the virtual representation of the sample block can be obtained by means of volumetric imaging or image acquisition, acquiring multiple images.

In a virtual representation of the sample block, acquired in this or another way, however, a real front surface of the sample block is typically not aligned with or included in an image plane of the acquired images. The actual position and/or orientation of such real plane in the virtual representation of the sample block, and also the position and/or orientation of the edge of the front surface, need to be known, however, in order to align the knife with the real sample block. A typical alignment process comprises aligning an edge of the knife parallel with the front surface of the sample block and, in particular, the edge of the front surface of the sample block. Further, the front surface of the sample block is typically aligned parallel with a cutting direction of the microtome. Only if such alignment has been performed, another alignment in order to cut along a desired cutting surface can correctly be made. The described way of determining the virtual front surface, edge and cutting plane allows correct alignment of a real sample block in order to cut along the desired cutting plane.

In an embodiment of the invention, the controller is further configured to control the microtome to align the sample block with the knife, according to the alignment parameters, after the sample block has been pre-aligned with the knife in the microtome, based on a real front surface of the sample block and a real edge of the front surface of the sample block, e.g., as described above. In an additional or alternative embodiment, the control is configured to provide user instructions about how to align the sample block with the knife, according to the alignment parameters, after the sample block has been pre-aligned with the knife in the microtome, based on a real front surface of the sample block and a real edge of the front surface of the sample block. Such user instructions might include values for how much different manual actors are to be actuated in order to achieve the desired alignment. Both ways allow easy and at the same time correct alignment.

In an embodiment of the invention, the first user input data comprises data relating to three different user-defined surface positions, wherein each of the three different user-defined surface positions is indicative of a front surface of the sample block in the virtual representation of the sample block. These user-defined surface positions can be or comprise, for example, positions in the virtual representation of the sample block where the user touches the display (if a touch display is used) or where a computer mouse arrow is present at a time when the user clicks the computer mouse or presses a key on a keyboard or the like. This allows easily defining the virtual front surface based on the current representation of the sample block.

In an embodiment of the invention, determining the virtual front surface of the sample block based on the first user input data comprises determining, for each of the three different user-defined surface positions, a surface position on a sample surface within the virtual representation of the sample block, based on intensity information of the virtual representation of the sample block, and determining the virtual front surface of the sample block based on the surface positions on the sample surface. In that the virtual representation of the sample block is based on or comprises intensity information, a position corresponding to a position on a real surface of the sample block can - in particularly automatically - be determined as the intensity changes significantly between the outside and the inside of the sample block, i.e., at the front surface.

In an embodiment of the invention, determining, for each of the three different user-defined surface positions, the surface position on the sample surface within the virtual representation of the sample block, based on intensity information of the virtual representation of the sample block, comprises: determining a threshold position, wherein the threshold position is a first position along a pre-defined direction having a transparency value greater than a pre-defined threshold in the virtual representation of the sample block, wherein the pre-defined direction is based on the user defined position, and using the threshold position as the surface position on the sample surface. This allows easy automatic determination of the actual front surface, based on the intensity information. The pre-defined direction can be, for example, along a straight line comprising the user-defined position and being directed from the outside of the sample block towards the front surface.

In an embodiment of the invention, the second user input data comprises data relating to two different user-defined edge positions in a front surface plane, wherein the front surface plane is a plane of the virtual front surface of the sample. After the virtual front surface of the sample has been determined, this is an easy way to exactly define an edge of the front surface in the virtual representation of the sample block. Again, the user can, for example, touch the display (if a touch display is used) or the user can click when a computer mouse arrow is present at a desired position. This allows easily defining the virtual edge of front surface based on the current representation of the sample block.

In an embodiment of the invention, the third user input data comprises data relating to a user-defined value of at least one cutting parameter, wherein the at least one cutting parameter defines a relation between the cutting plane and the virtual representation of the sample block. The user can input a specific value for the at least one parameter in a user interface rendered on the display, for example, Also, the user can select a specific value by means of a scale or button or slider shown in a user interface rendered on the display, for example. This allows easily defining the cutting plane.

In an embodiment of the invention, the controller is further configured to receive a current value for the at least one cutting parameter, and control the display to visualize a current virtual cutting plane in the 3D representation of the sample block, based on the current value for the at least one cutting parameters. In this way, the user can view the defined cutting plane on the display.

In an embodiment of the invention, the at least one cutting parameter comprises at least one of the following: a pitch angle, a yaw angle, a rotation angle, and a translational position. Each of these angles defines an angle for a rotation which can be set or changed in typical microtomes. In addition, a translational position for the cutting plane is typically also possible. Using these parameters allows easy and correct alignment.

In an embodiment of the invention, the sample block comprises a sample and remaining material; remaining material can comprise, in particular, material used for embedding the sample, e.g., resin or the like. The controller is further configured to control the display to visualize the virtual representation of the sample block in a first view and in a second view. In the first view, the remaining material in the virtual representation of the sample block is less transparent than in the second view. In the second view, the sample in the virtual representation of the sample block is less transparent than the remaining material. This allows a user to choose between different views to see either the sample or the remaining material better, e.g., depending on what inputs to make. In an extreme case, for example, in the first view only the remaining material is visible but not the sample, and in the second view, only the sample is visible but not the remining material.

In an embodiment of the invention, the controller is further configured to control the display to visualize the virtual representation of the sample block in the first view in order to allow generating at least one of the first user input data and the second user input data. This allows easily generating the first and/or second user input which relate to defining features of the sample block, i.e., the remaining material is more important to see than the sample.

In an embodiment of the invention, the controller is further configured to control the display to visualize the virtual representation of the sample block in the second view in order to allow generating the third user input data. This allows easily generating the third user input which relates to defining features of the sample (the cutting plane is intersecting the sample), i.e., the remaining material is less important to see than the sample.

Another embodiment of the invention - as a further or a separate aspect - relates to a controller for a microtome, wherein the microtome is configured to cut slices from a sample block by means of a knife. Further, the microtome can be a microtome as explained above. The sample block comprises a sample and remaining material. Said controller is configured to control a display to visualize a virtual representation of the sample block in different views, wherein at least one of the sample and the remaining material has a different transparency in the different views. Further, the controller is configured to control the display to switch between the different views, for example, based on receiving user input data. This allows to present or show the virtual representation of the sample block to a user in different views to see either the sample or the remaining material better, e.g., depending on what inputs to make.

In an embodiment of the invention, in a first view, the virtual representation of the sample block comprises a bigger fraction of the remaining material and a smaller fraction of the sample than in a second view. In an extreme case, for example, in the first view only the remaining material is visible but not the sample, and in the second view, only the sample is visible but not the remining material. This allows a user to better distinguish between both parts (sample and remaining material) to make better decisions relating to the sample block, for example.

In an embodiment of the invention, the virtual representation of the sample block is based on multiple images, and the controller is configured to control the display to visualize the virtual representation of the sample block based on an intensity of the multiple images. In the different views, the virtual representation of the sample block is based on different ranges of intensity values of the multiple images. In this way, an easy differentiation between the two different views can be made, and, the two different views can easily be generated. The ranges can be selected, for example, based on specific needs.

In an embodiment of the invention, the different ranges of intensity comprise a first range of intensity and a second range of intensity, wherein the first range of intensity comprises more intensity values corresponding to the remaining material and less intensity values corresponding to the sample than the second range of intensity. This results in good differentiation between the two parts, sample and remaining material, in the different views.

In an embodiment of the invention, the controller is further configured to control the display to automatically switch between the different views, based on a current task to be performed on the virtual representation of the sample block. For example, when a user is about to view features of the sample or to make inputs relating to the sample, a view showing mainly the sample is more helpful than the other view and expedites the input, for example. Similarly, when a user is about to view features of the remaining material or to make inputs relating to the remaining material, a view showing mainly the remaining material is more helpful than the other view.

In an embodiment of the invention, the controller is further configured to control the display to switch between the different views in a continuous or quasi-continuous mode such the transparency of the at least one of the sample and the remaining material changes continuously or quasi-continuously. In this way, a user can choose a view that suits the specific user best, for example.

Another embodiment of the invention - as an additional or separate aspect - relates to a controller, e.g., for a microtome. The controller is configured to control a display to visualize a virtual representation of an object, e.g. a sample block, and receive first positional user input data. The first input positional data is indicative of a user-defined position in the virtual representation of the object. The controller is further configured to control the display to visualize an enlarged view of the virtual representation of the object, wherein the enlarged view comprises the user-defined position, and to control the display to visualize, in the enlarged view, a first symbol at a first position. The second position is different from the first position, defining a relative position between the first symbol and the second symbol. The first position can be the user-defined position or another position, e.g., nearby. The first symbol can be a dot or a cross, for example. The second symbol can be a directional cross showing four directions, for example.

Further, the controller is configured to receive second positional user input data, wherein the second positional user input data is indicative of moving a second position. The second position is different from the first position, defining a relative position between the first position and the second position. The first position can be the user-defined position or another position, e.g., nearby. The first symbol can be a dot or a cross, for example. In an embodiment, a second symbol can be visualized in the enlarged view at the second position for assisting the user. The second symbol can be a directional cross showing four directions, for example. Further, the controller is configured to control the display to visualize the first symbol based on the second positional user input data, wherein the relative position between the first position and the second position does not change.

In this way, the user can, with the first positional user input, roughly define a particular position and then perform a moving action in the enlarged view while permanently seeing the first symbol at or near the initially defined position. Thus, the user can exactly define the desired position, starting from the initially only roughly defined position.

In an embodiment of the invention, the controller is further configured receive third positional user input data, wherein the third positional input data is indicative of a final user-defined position in the virtual representation of the object, wherein the final user-defined position corresponds to the first position after having finished the moving action. For example, the user can provide the third positional user input data, e.g., by touching the display (if a touch display is used) or in another way after having finished the moving such that the first symbol is at the position the user wishes it to be. This allows an easy and quick definition of a position even if the exact position cannot be chosen initially in the not enlarged view.

In an embodiment of the invention, the display is or comprises a touch display. The second positional user input data is received from the touch display, and the second positional user input data is generated by moving a touch-object touching the touch display. This allows an easy and quick definition of a position even though the user cannot see the display portion at which the user touches (with a finger or stylus, for example, as the touch-object).

In an embodiment of the invention, the second positional user input data is generated by moving the touch-object touching the touch display at a pre-defined area outside the first position. Preferably, the second positional user input data is not generated when touching the touch display outside the pre-defined area. In this way, the first symbol can always be viewed by a user when moving it.

In an embodiment of the invention, the controller is a controller for a microtome, wherein the microtome is configured to cut slices from a sample block by means of a knife, wherein the object is or comprises the sample block, as explained above, for example.

Another embodiment of the invention relates to a method for obtaining alignment parameters for a microtome, wherein the microtome is configured to cut slices from a sample block by means of a knife. The method comprises the following steps: Controlling a display to visualize a virtual representation of the sample block. Receiving first user input data, wherein the first user input data is indicative of a front surface of the sample block in the virtual representation of the sample block. Determining a virtual front surface of the sample block based on the first user input data. Receiving second user input data, wherein the second input data is indicative of an edge of the front surface of the sample block in the virtual representation of the sample block. Determining a virtual edge of the front surface of the sample block based on the second user input data. Receiving third user input data, wherein the third user input data is indicative of a cutting plane intersecting the sample block in the virtual representation of the sample block. Determining a virtual cutting plane intersecting the sample block, based on the third user input. And determining alignment parameters for the microtome, based on the virtual front surface of the sample block, the virtual edge of the front surface of the sample block, and the virtual cutting plane, wherein the alignment parameters define a relation between the virtual cutting plane, the virtual front surface of the sample block and the virtual edge of the front surface of the sample block

Another embodiment of the invention relates to a method for visualizing a sample block, wherein the sample block comprises a sample and remaining material. The method comprises the following steps: Controlling a display to visualize a virtual representation of the sample block in different views, wherein at least one of the sample and the remaining material has a different transparency in the different views. And controlling the display to switch between the different views.

Another embodiment of the invention relates to a method for defining a position at an object. The object can be, for example, a sample block. The method comprises the following steps: Controlling a display to visualize a virtual representation of an object. Receiving first positional user input data, wherein the first positional input data is indicative of a user-defined position in the virtual representation of the object. Controlling the display to visualize an enlarged view of the virtual representation of the object, wherein the enlarged view comprises the user-defined position. Controlling the display to visualize, in the enlarged view, a first symbol at a first position. Receiving second positional user input data, wherein the second positional user input data is indicative of moving a second position, wherein the second position is different from the first position, defining a relative position between the first position and the second position. And controlling the display to visualize the first symbol based on the second positional user input data, wherein the relative position between the first position and the second position does not change.

As to further embodiments and advantages of the methods it is referred to the remarks above referring to the controllers, which apply here correspondingly.

Although the different aspects of the present invention, i.e., (i) defining the front surface, the edge of the front surface and the cutting plane, (ii) generating different views based on transparency, and (iii) using the enlarged view for defining a position, can be used individually or in their respective embodiments, these aspects and their different embodiments can also be combined. For example, the different views can be used to define different features (the front surface and the edge on the one hand, and the cutting plane on the other hand). For example, the enlarged view can be used in order to define the edge of the front surface as this requires exactly defining a position and hat can be difficult with a touch display otherwise, i.e. without the enlarged view and the shifted symbols.

Another embodiment of the invention relates to a microtome system comprising a microtome, a display and the controller of any one or combinations of the different aspects and embodiments described above, as far as the controller is to be used for a microtome. The microtome is configured to cut slices from the sample block by means of the knife.

A further embodiment of the invention relates to a computer program with a program code for performing one or more of the methods of above, when the computer program is run on a processor.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

## Short description of the Figures

Fig. 1            schematically shows a microtome system according to an embodiment of the invention;

Fig. 2a           schematically shows a sample block for illustrating an embodiment of the invention;

Fig. 2b           schematically shows part of a microtome system according to an embodiment of the invention;

Figs. 3a, 3b      schematically show a display for illustrating an embodiment of the invention;

Fig. 4            schematically shows a display for illustrating an embodiment of the invention;

Figs. 5a, 5b      schematically show diagrams for illustrating an embodiment of the invention;

Figs. 6a, 6b      schematically show a display for illustrating an embodiment of the invention;

Fig. 7            schematically shows a method according to an embodiment of the invention in a flow diagram.

Fig. 8            schematically shows a method according to an embodiment of the invention in a flow diagram.

Fig. 9            schematically shows a method according to an embodiment of the invention in a flow diagram.

## Detailed Description

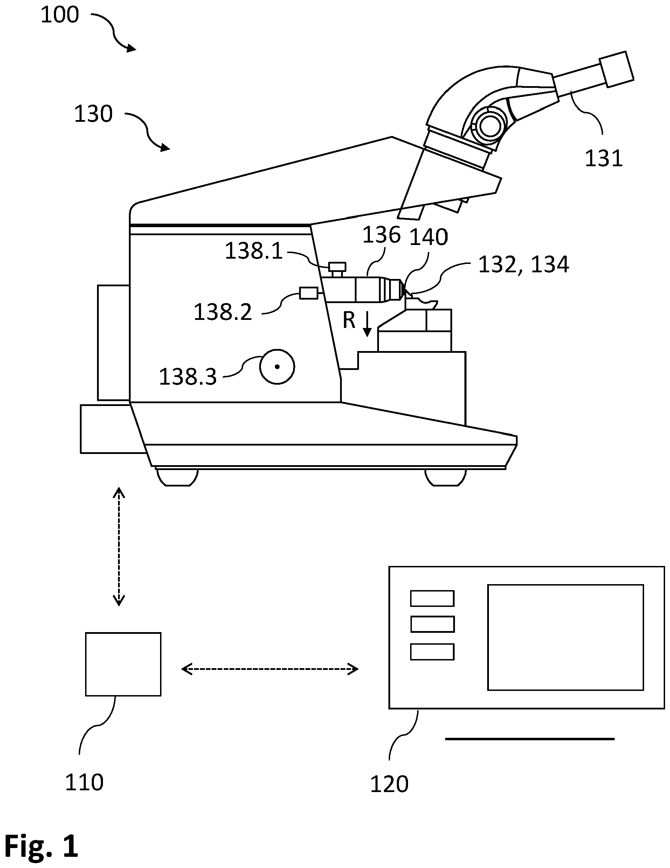

Fig. 1 schematically illustrates a microtome system 100 according to an embodiment of the invention. The microtome system 100 comprises a microtome 130, a controller 110 for the microtome, and a display 120. The controller 110 can be a controller according to an embodiment of the invention. In an embodiment, the display 120 is or comprises a touch-display. For example, the display 120 can be part of a handheld device like a tablet.

In an embodiment, the controller 110 and the display 120 can also be combined or integrated into one another. For example, the controller 110 can be integrated into the display 120. In an embodiment, the controller 110 and the microtome 130 can also be combined or integrated into one another. For example, the controller 110 can be integrated into the microtome 130. In an embodiment, the controller 110, the display 120 and the microtome 130 can also be combined or integrated into each another.

The microtome 130, for example, comprises a knife holder 134, in which a knife 132 can be arranged. The knife 132 can also be part of the microtome. Further, the microtome 130, for example, comprises a sample holder or specimen holder 136, in which a sample block 140 can be arranged. The microtome is configured to cut slices from the sample block 140 by means of the knife 132, by moving the sample block 140 and the knife 132 relative to each other along a cutting direction R. Further, the microtome 130 comprises, for example, an eyepiece 131.

In an embodiment, the microtome 130 comprises two actors 138.1 and 138.2 by means of which the sample block 140 and the knife 132 an be aligned to each other. It is noted that these actors are shown exemplarily only, a further explanation of how such alignment can performed, will be provided later. Also, three actors could be used, for example. In an embodiment, the microtome 130 comprises a drive 138.3, e.g., comprising a hand wheel, that can be used to perform a cutting process in order to cut slices from the sample block 140.

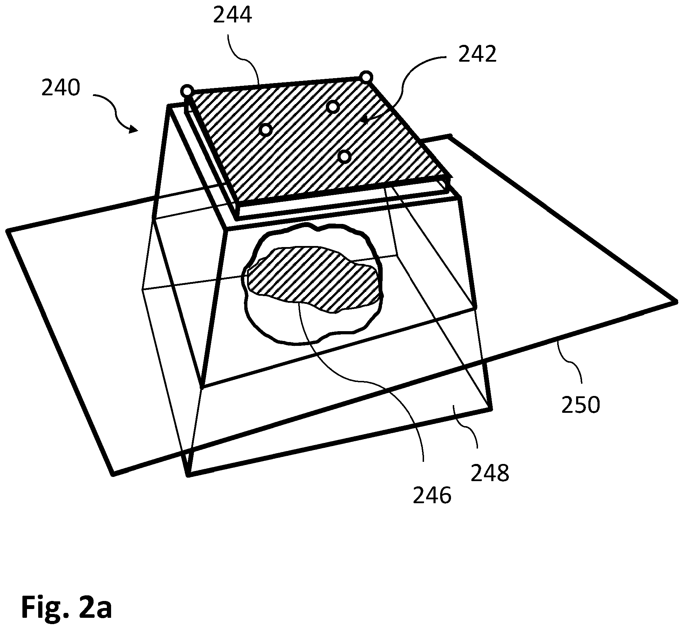

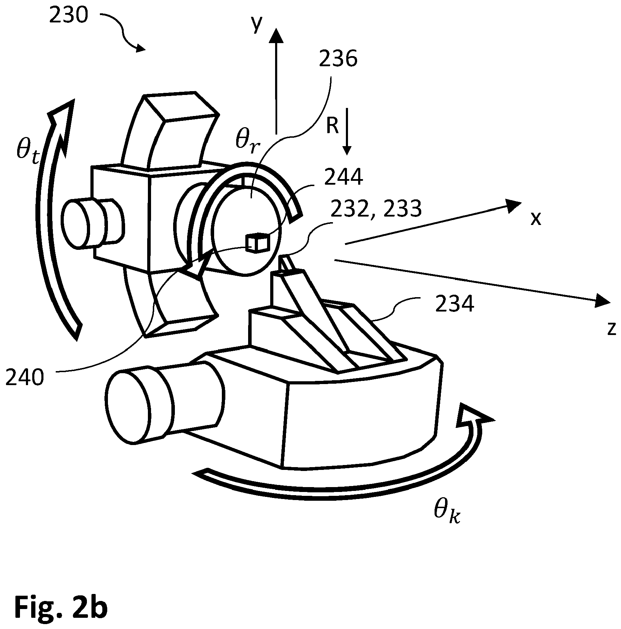

Fig. 2a schematically illustrates a sample block 240 and Fig. 2b illustrates a microtome 230 in which the sample block 240 is arranged. Microtome 230 can correspond to microtome 130 of Fig. 1. In contrast to Fig. 1, only parts of the microtome are illustrated, comprising a sample holder 236 in which the sample block 240 is arranged, and a knife holder 234, in which the knife 232 with a knife edge 233 is arranged.

The sample block 240 comprises a sample 246 and remaining material 248. The remaining material 248 can be resin or other material for embedding the sample 246. A typical shape of such sample block is a truncated pyramid as shown in Fig. 2. However, other shapes can be used.

Further, the sample block 240 comprises a front surface 242. The front surface 242 is the surface of the sample block which is to be oriented towards the knife of the microtome when arranging the sample block 240 in the microtome or its sample holder. Further, the front surface 242 has, typically, four edges, one of which is denoted 244. When the sample block 240 is arranged in the microtome, the sample block 240 is placed such that one of these edges is located on a top side; this edge is to be aligned - initially - with an edge of the knife. In the following edge 244 shall be this edge at the top side although every other edge might be placed at the top side.

Further, a cutting plane 250 is illustrated in Fig. 2a; the cutting plane 250 intersects the sample block 240, e.g., such that it also intersects the sample 248. This cutting plane 250 is not part of the sample block 240 as such but it shall illustrate a plane along or in which slices shall be cut from the sample block by means of the microtome. This requires that, in the microtome, the knife and the sample block 240 have to be aligned such that the knife cuts along or in the cutting plane 250.

When arranging the sample block 240 in the microtome, alignment of the knife with the cutting plane 250 is not directly possible because the cutting plane is not present in reality. Instead, the front surface 242 and the edge 244 can - and will - be aligned with the knife 232 or its edge 233. The edge of the knife shall be aligned to be parallel to the edge 244 and a cutting direction of the microtome shall be parallel to the front surface 242. Such initial alignment or pre-alignment can be done manually as a user can see the front surface 242, the edge 244 and the knife via, e.g. the eyepiece or using a camera, and can, thus, perform this pre-alignment.

In Fig. 2b, possible ways of how such alignment can be performed, are illustrated. Three axes x, y, z of an orthogonal coordinate system of the microtome 230 are illustrated by means of example. The sample holder 236 (and, thus, the sample block 240) can be rotated around the y axis (sample tilt with tilt or pitch angle $\theta_t$), and around the x axis (sample rotation with rotation or roll angle $\theta_r$). The knife holder 234 (and, thus, the knife 232) can be rotated around the axis z (knife tilt with yaw angle $\theta_k$). Each of these angles can be adjusted, for example, in motorized and/or manual way. It is noted that the rotation possibilities might otherwise be implemented, for example, the knife holder 234 could also be rotatable around the y axis to adjust the pitch angle.

The cutting direction R can be defined as the direction along which the knife and the sample block are moved relative to each other. For example, the cutting direction can be along the z axis.

Afterwards, the knife and the sample block 240 have to be aligned such that the edge of the knife is parallel to the cutting plane 250 and that the cutting direction is parallel to the cutting plane. A way of how to obtain alignment parameters according to which the sample block 240 and the knife can be aligned manually or automatically, starting from the initial or pre-alignment, to reach the mentioned alignment, will be described in the following.

In an embodiment, the controller 110 (see Fig. 1) is configured to control the display 120 to visualize a virtual representation of the sample block, receive first user input data, wherein the first user input data is indicative of the front surface 242 of the sample block in the virtual representation of the sample block, determine a virtual front surface of the sample block based on the first user input data, receive second user input data, wherein the second input data is indicative of the edge 244 of the front surface of the sample block in the virtual representation of the sample block, determine a virtual edge of the front surface of the sample block based on the second user input data, receive third user input data, wherein the third user input data is indicative of the cutting plane 250 intersecting the sample block in the virtual representation of the sample block, determine a virtual cutting plane intersecting the sample block, based on the third user input, and determine the alignment parameters for the microtome 130, based on the virtual front surface of the sample block, the virtual edge of the front surface of the sample block, and the virtual cutting plane, wherein the alignment parameters define a relation between the virtual cutting plane, the virtual front surface of the sample block and the virtual edge of the front surface of the sample block.

These steps which the controller 110 is configured to perform, and different embodiments thereof, will be described in the following in more detail.

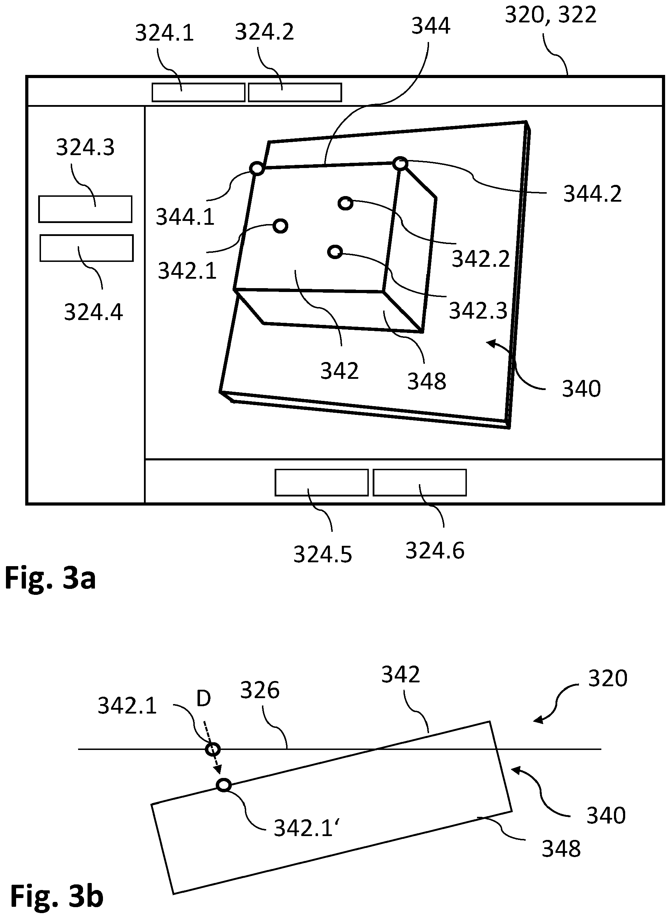

Fig. 3a schematically illustrates a display 340 for illustrating an embodiment of the invention. Display 320 can correspond to display 120 of Fig. 1 but is shown with more details. In an embodiment, display 320 is a touch-display. A user interface 322 can be rendered on display 320, e.g., by means of the controller controlling the display 320.

On display 320, a virtual representation 340 of the sample block 240 is shown. By means of example, the virtual representation 340 is shown in 3D (3-dimensional) and in a first view. In the embodiment shown in Fig. 3a, in the first view the remaining material 348 in the virtual representation 340 of the sample block is visible. In addition, and by means of example, different input means like buttons (e.g., soft buttons) 324.1, 324.2, 324.3, 324.4, 324.5, 324.6 are illustrated which can be part of the user interface 322 to allow interaction of the user with the display and the controller.

In a first workflow step, for example, the virtual front surface 342 of the sample block and the edge 344 can be determined. The first workflow step can be started, for example, by touching button 324.1. Starting this workflow step might also include showing the virtual representation 340 in the first view if this is not the case already.

In order to determine a virtual front surface 342 of the sample block, i.e., a front surface in the virtual representation that corresponds to the real front surface, first user input data is to be received. Such sub-step can be started, for example, by touching button 324.3.

In an embodiment, the first user input data comprises data relating to three different user-defined surface positions 342.1, 342.2, 342.3 shown in Fig. 3a. Each of the three different user-defined surface positions is indicative of a front surface of the sample block in the virtual representation 340 of the sample block. In order to generate the first user input data, the user can, for example, touch the display 320 (if it is a touch-display). It is noted that, in general, three positions are sufficient to define a plane like the front surface. This means that a user can, for example, touch the display at three different positions, e.g., at the three positions corresponding to 342.1, 342.2, 342.3. It is noted that the three positions should not lie on common straight line. Touching the display at a position can, for example, generate a signal received at the controller that is indicative of the touched position in relation the virtual representation shown at the time of touching.

In an embodiment, an invitation or instruction can be provided to the user, e.g., displayed on the display 320, inviting the user to define three positions (which will then be the user-defined surface positions 342.1, 342.2, 342.3) near the virtual front surface 344 on the display, e.g., by touching the display. Further, the user might be instructed to choose three points that do not lie on a common straight line.

In an embodiment, determining the virtual front surface 342 of the sample block based on the first user input data comprises determining, for each of the three different user-defined surface positions 342.1, 342.2, 342.3, a surface position on a sample surface within the virtual representation 340 of the sample block, based on intensity information of the virtual representation of the sample block. Then the virtual front surface 342 of the sample block is determined based on the surface positions on the sample surface.

Fig. 3b illustrates the display 320 of Fig. 3a in a cross section, i.e. along a direction orthogonal to the drawing plane of Fig. 3a. The virtual representation 340 of the sample block is also shown. It is noted that the illustration in Fig. 3b is only a theoretical one to illustrate the idea on which the described feature is based.

As can be seen in Fig. 3b, the virtual front surface 344 does not correspond to the front-most plane of the virtual representation presented on the display 320, i.e. the display plane 326. Rather, the virtual front surface 344 is tilted with respect to the display plane 326. Although the controller can be configured to allow rotating or otherwise moving the virtual front surface 344, the case illustrated in Fig. 3b can - or will most likely - happen. A user might not realize such tilt.

The user-defined surface positions are those generated on the display plane 326, as is illustrated by user-defined surface position 342.1. The surface positions mentioned above, however, correspond to positions at the (virtual) front surface of the sample block in the virtual representation, like illustrated with surface position 342.1'.

In an embodiment, determining, for each of the three different user-defined surface positions 342.1, 342.2, 342.3, the surface position 342.1' on the sample surface 342 within the virtual representation of the sample block, based on intensity information of the virtual representation of the sample block, comprises: determining a threshold position, wherein the threshold position is a first position along a pre-defined direction having an intensity value greater than a pre-defined threshold in the virtual representation of the sample block, and using the threshold position as the surface position on the sample surface.

As mentioned before, the front-most plane or display plane 326 currently presented in the display will not or at least not for all positions correspond to the actual front surface. However, the actual front surface of the sample block in the virtual representation will be near the display plane, as can be seen for user-defined surface position 342.1 and surface position 342.1'.

The virtual representation 340 of the sample block can be such that the sample block as such (in Fig. 3a, this would correspond to the remaining material 348) has a higher intensity than the surrounding of the sample block, i.e., in data used for generating the virtual representation, points representing the sample block will be assigned a higher intensity value or a value higher than a threshold-value than anything outside (where nothing is). So, a point or position in the virtual representation of the sample block can be found, that is next to the user-defined surface position 342.1 that exceeds the threshold value. A next-most point, for example when following a certain direction D like shown in Fig. 3b, will thus belong the actual front surface; this is the surface position 342.1'. The direction D can, for example, be orthogonal to the front surface 342 or to the display plane 326, and be directed to the front surface 342. In general, a plane in the virtual representation can be found that has, starting from front to back (as viewed in the display, i.e., following the direction D), an intensity value greater than the threshold value. It is noted that this also works for positions where the virtual representation of the sample block is partly "outside" the display as shown at the right side in Fig. 3b.

The threshold value can be set to zero since outside the sample block there is nothing, i.e., intensity is zero. In order to prevent any intensity values being chosen which are present by error, the threshold value can also be set to a value slightly higher than zero, for example.

It is noted that the controller can, in an embodiment, configured to allow the user to choose more than three user-defined positions, i.e., the first user input data can comprise data relating to more than three different user-defined surface positions. In this way, the front surface can be determined more exactly.

In order to determine the virtual edge of the front surface of the sample block, second user input data is to be received. Such sub-step can be started, for example, by touching button 324.4.

In an embodiment, the second user input data comprises data relating to two different user-defined edge positions 344.1, 344.2 in a front surface plane, wherein the front surface plane is a plane of the virtual front surface 342 of the sample block, i.e., the plane in which the virtual front surface 342 is situated. The two different user-defined edge positions 344.1, 344.2 correspond to corners of the virtual front surface in the example shown in Fig. 3a. It is noted, however, that other two (or more) points or positions on the actual edge could be chosen.

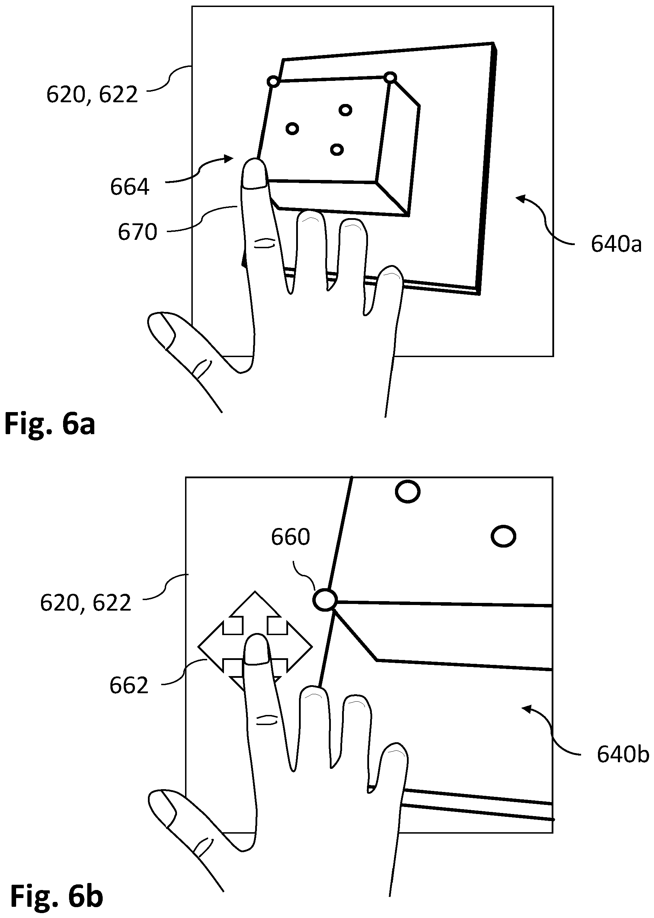

Since the front surface 342 and, thus, the front surface plane, have already be determined, the controller knows in which plane the edge will be situated. Thus, the user only has to select two positions that are as close to the edge of the front surface 344 as possible. In particular when using a touch-display, touching two points very exactly can be difficult. A way to nevertheless be able to exactly define two positions or points will be describe with regard to Figs. 6a, 6b below.

In a second workflow step, for example, a virtual cutting plane intersecting the sample block can be determined. The second workflow step can be started, for example, by touching button 324.2. Starting this workflow step might also include showing the virtual representation in the second view if this is not the case already, i.e. the virtual representation can be switched to the second view.

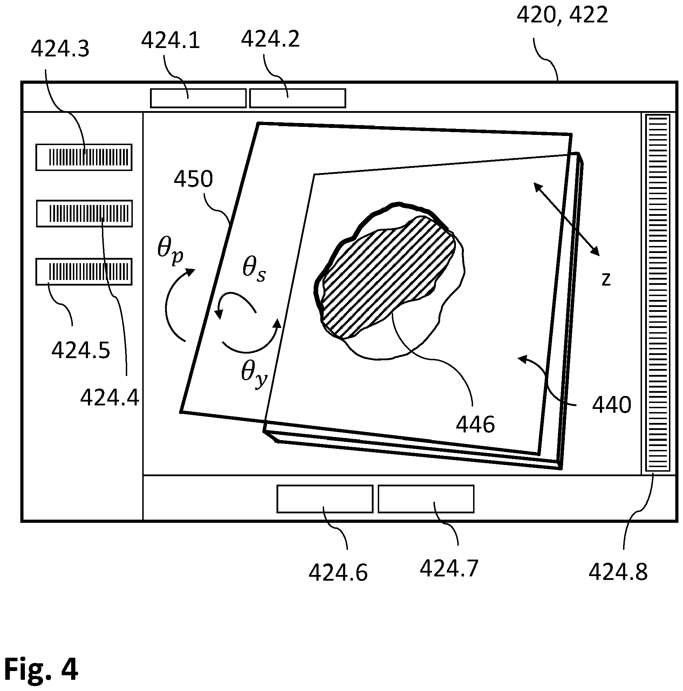

Fig. 4 schematically illustrates a display 420 for illustrating an embodiment of the invention. Display 420 can correspond to display 320 of Fig. 3a. A user interface 422 can be rendered on display 420, e.g., by means of the controller controlling the display 420. In other words, display 420 can correspond to display 320 with another user interface or, at least, another view being shown.

On display 420, a virtual representation 440 of the sample block 240 is shown. By means of example, the virtual representation 440 is shown in 3D (3-dimensional) and in a second view. In the embodiment shown in Fig. 4, in the second view the sample 446 in the virtual representation 440 of the sample block is visible. In addition, and by means of example, different input means like buttons (e.g., soft buttons) or sliders 424.1, 424.2, 424.3, 424.4, 424.5, 424.6, 424.7, 424.8 are illustrated which can be part of the user interface 422 to allow interaction with the user. Buttons 424.1, 424.2 can correspond to buttons 324.1, 324.2, for example, such that touching button 424.1 would switch to the first view or the user interface shown in Fig. 3a.

In order to determine the virtual cutting plane 450, shown in Fig. 4, third user input data is to be received. In an embodiment, the third user input data comprises data relating to a user-defined value of at least one cutting parameter, wherein the at least one cutting parameter defines a relation between the cutting plane 250 and the virtual representation 440 of the sample block. In an embodiment, the controller is configured to receive a current value for the at least one cutting parameter, and control the display to visualize the current virtual cutting plane 450 in the virtual representation 440 of the sample block, based on the current value for the at least one cutting parameters.

In an embodiment, the at least one cutting parameter comprises at least one of the following: a pitch angle $\theta_p$ of the cutting plane, a yaw angle $\theta_y$, a cutting plane rotation angle $\theta_s$, and a translational position z. All of these cutting parameters are illustrated in Fig. 4.

The input means 424.3, 424.4, 424.5, 424.8 can be sliders or (virtual) wheels for example, which can be operated by the user. For example, the user can touch the display 420 with a touch-object (e.g., a finger) at a position of such slider and move the touch-object in order to adjust a cutting parameter. For example, the pitch angle $\theta_p$ of the cutting

plane can be adjusted via slider 424.3, the yaw angle $\theta_y$ can be adjusted via slider 424.4, the cutting plane rotation angle $\theta_s$ can be adjusted via slider 424.5, and the translational position z can be adjusted via slider 424.8. The current virtual cutting plane 450 in the virtual representation 440 of the sample block can, for example, be based on the current values for the cutting parameters. When the user changes one cutting parameter or its value, the current virtual cutting plane 450 changes accordingly. In this way, the user can define the current virtual cutting plane 450 according to requirements, for example. The finally chosen values of the cutting parameters can then correspond to the third user input data.

Further, the alignment parameters for the microtome are determined, based on the virtual front surface of the sample block, the virtual edge of the front surface of the sample block, and the virtual cutting plane. The alignment parameters define a relation between the virtual cutting plane, the virtual front surface of the sample block and the virtual edge of the front surface of the sample block.

An alignment transformation matrix $T_a$ for the rotation from the sample block, initially aligned on the microtome, to the virtual representation of the sample block, can be calculated from a normal vector $(n_x, n_y, n_z)$ on the front surface (e.g., front surface 242) and a normalized vector along the edge $(v_x, v_y, v_z)$ of the front surface (e.g., edge 244) for example:

$$T_a = \begin{pmatrix} v_x & n_y v_z - n_z v_y & n_x \\ v_y & n_z v_x - n_x v_z & n_y \\ v_z & n_x v_y - n_y v_x & n_z \end{pmatrix}.$$

The three angles (cutting parameters) can be defined relative to the aligned sample block coordinate system, i.e. a coordinates system of the sample block when the sample block is pre-aligned in the microtome. A cutting transformation matrix $T_c$ can be calculated by

$$T_c = \begin{pmatrix} 1 & 0 & 0 \\ 0 & \cos\theta_s & -\sin\theta_s \\ 0 & \sin\theta_s & \cos\theta_s \end{pmatrix} \begin{pmatrix} \cos\theta_y & 0 & -\sin\theta_y \\ 0 & 1 & 0 \\ \sin\theta_y & 0 & \cos\theta_y \end{pmatrix} \begin{pmatrix} \cos\theta_p & -\sin\theta_p & 0 \\ \sin\theta_p & \cos\theta_p & 0 \\ 0 & 0 & 1 \end{pmatrix}.$$

The transformation matrix for the transformation from the virtual representation of the sample block to the cutting plane can be calculated by multiplying the cutting transformation matrix $T_c$ with the alignment transformation matrix $T_a$.

In an embodiment, the controller is configured to control the microtome 110 to align the sample block with the knife, according to the alignment parameters, after the sample block has been pre-aligned with the knife in the microtome, based on a real front surface of the sample block and a real edge of the front surface of the sample block.

Considering only rotations, the transformation matrix $T$ for a transformation from the microtome knife coordinates $(x_m, y_m, z_m)$ to the sample block coordinates $(x_s, y_s, z_s)$ is a combination of knife tilt with angle $\theta_k$ about the y-axis, then the sample block rotation with angle $\theta_r$ about the rotated z-axis and the the sample block tilt with angle $\theta_t$ about the two times rotated y-axis

$$\begin{pmatrix} x_s \\ y_s \\ z_s \end{pmatrix} = T \cdot \begin{pmatrix} x_m \\ y_m \\ z_m \end{pmatrix}$$

$$= \begin{pmatrix} 1 & 0 & 0 \\ 0 & \cos\theta_t & -\sin\theta_t \\ 0 & \sin\theta_t & \cos\theta_t \end{pmatrix} \begin{pmatrix} \cos\theta_r & -\sin\theta_r & 0 \\ \sin\theta_r & \cos\theta_r & 0 \\ 0 & 0 & 1 \end{pmatrix} \begin{pmatrix} \cos\theta_k & 0 & -\sin\theta_k \\ 0 & 1 & 0 \\ \sin\theta_k & 0 & \cos\theta_k \end{pmatrix} \begin{pmatrix} x_m \\ y_m \\ z_m \end{pmatrix}$$

To determine the angles $\theta_r$, $\theta_t$ and $\theta_k$ for controlling the microtome, the initial values of the angles of the drives (or actors) and the selected cutting plane have to be considered. The initial values of the angles, $\theta_{ri}$, $\theta_{ti}$ and $\theta_{ki}$ result in transformation $T_i$:

$$T_i = \begin{pmatrix} 1 & 0 & 0 \\ 0 & \cos\theta_{ti} & -\sin\theta_{ti} \\ 0 & \sin\theta_{ti} & \cos\theta_{ti} \end{pmatrix} \begin{pmatrix} \cos\theta_{ri} & -\sin\theta_{ri} & 0 \\ \sin\theta_{ri} & \cos\theta_{ri} & 0 \\ 0 & 0 & 1 \end{pmatrix} \begin{pmatrix} \cos\theta_{ki} & 0 & -\sin\theta_{ki} \\ 0 & 1 & 0 \\ \sin\theta_{ki} & 0 & \cos\theta_{ki} \end{pmatrix}$$

and the user-selected cutting plane results in transformation $T_c$:

$$T_c = \begin{pmatrix} 1 & 0 & 0 \\ 0 & \cos\theta_s & -\sin\theta_s \\ 0 & \sin\theta_s & \cos\theta_s \end{pmatrix} \begin{pmatrix} \cos\theta_y & 0 & -\sin\theta_y \\ 0 & 1 & 0 \\ \sin\theta_y & 0 & \cos\theta_y \end{pmatrix} \begin{pmatrix} \cos\theta_p & -\sin\theta_p & 0 \\ \sin\theta_p & \cos\theta_p & 0 \\ 0 & 0 & 1 \end{pmatrix}.$$

The desired transformation matrix $T$ for the microtome is then $T = T_i * T_c$

$$
\begin{aligned}
T &= \begin{pmatrix} T_{00} & T_{01} & T_{02} \\ T_{10} & T_{11} & T_{12} \\ T_{20} & T_{21} & T_{22} \end{pmatrix} \\[6pt]
&= \begin{pmatrix} 1 & 0 & 0 \\ 0 & \cos\theta_t & -\sin\theta_t \\ 0 & \sin\theta_t & \cos\theta_t \end{pmatrix} \begin{pmatrix} \cos\theta_r & -\sin\theta_r & 0 \\ \sin\theta_r & \cos\theta_r & 0 \\ 0 & 0 & 1 \end{pmatrix} \begin{pmatrix} \cos\theta_k & 0 & -\sin\theta_k \\ 0 & 1 & 0 \\ \sin\theta_k & 0 & \cos\theta_k \end{pmatrix} \\[6pt]
&= \begin{pmatrix} \cos\theta_r \cos\theta_k & -\sin\theta_r & \cos\theta_r \sin\theta_k \\ \cos\theta_t \sin\theta_r \cos\theta_k - \sin\theta_t \sin\theta_k & \cos\theta_t \cos\theta_r & \cos\theta_t \sin\theta_r \sin\theta_k + \sin\theta_t \cos\theta_k \\ -\sin\theta_t \sin\theta_r \cos\theta_k - \cos\theta_t \sin\theta_k & -\sin\theta_t \cos\theta_r & -\sin\theta_t \sin\theta_r \sin\theta_k + \cos\theta_t \cos\theta_k \end{pmatrix}
\end{aligned}
$$

First, the transformation matrix $T$ can be calculated, then the angles can be calculated from the matrix elements via:

$$\theta_k = \arctan(T_{02}/T_{00}), \ \theta_t = \arctan\left(-\frac{T_{21}}{T_{11}}\right) \text{ and } \theta_r = \arctan\left(-\frac{T_{01}}{T_{11}} \cdot \cos\theta_r\right).$$

In this way, the microtome can be controlled to automatically align the sample block with the knife such that a slice can be cut along the cutting plane as defined by the user as explained above.

It is noted that different ways of defining the axes and angles can be chosen, what might result in different transformations. However, the way shown is one way to implement the transformation.

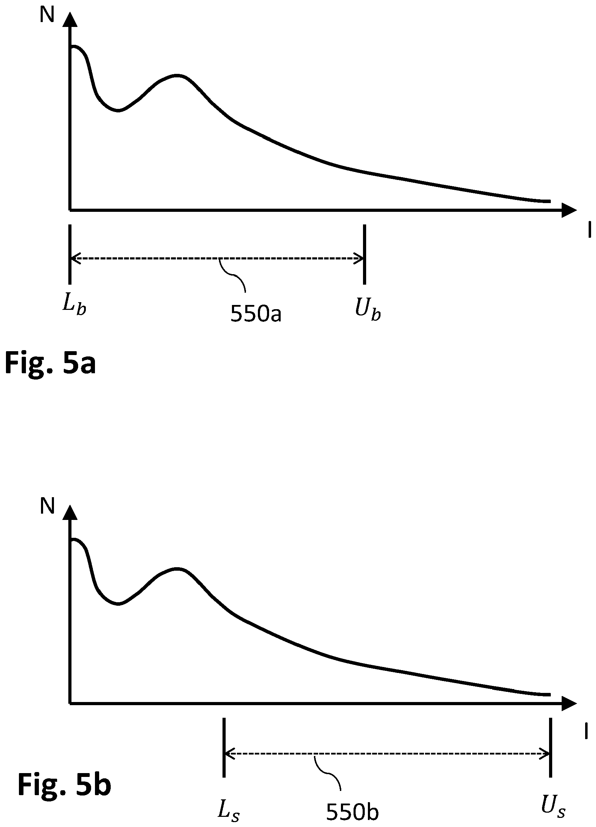

Figs. 5a, 5b schematically show diagrams for illustrating an embodiment of the invention. It will also be referred to Figs. 3a and 4 in this regard. In an embodiment, the controller is configured to control a display like display 120, 320, or 430 to visualize a virtual representation like 340, 440 of the sample block in different views. With regard to Figs. 3a and 4, the different views (a first view in Fig. 3a and a second view in Fig. 4) have already been mentioned. At least one of the sample 446 and the remaining material 348 has a different transparency in the different views 340, 440. The control is further configured to control the display to switch between the different views; this has also been mentioned with regard to Fig. 4.

In an embodiment, the different views comprise a first view 340 and a second view 440 (see Figs. 3a, Fig. 4. In the first view 340, the remaining material 348 in the virtual representation 340 of the sample block is less transparent than in the second view In the second view 440, the sample 446 in the virtual representation 440 of the sample block is less transparent than the remaining material.

In an embodiment, in the first view, the virtual representation 340 of the sample block comprises a bigger fraction of the remaining material and a smaller fraction of the sample than in the second view. In an extreme case, only the remaining material is visible in the first view, but not the sample, as this is the case in Fig. 3a. In an extreme case, only the sample is visible in the second view, but not the remaining material, as this is the case in Fig. 4.

In an embodiment, the virtual representation of the sample block is based on multiple images (as already mentioned before). The controller is configured to control the display to visualize the virtual representation of the sample block based on an intensity of the multiple images, wherein, in the different views, the virtual representation of the sample block is based on different ranges of intensity values of the multiple images.

These different ranges are illustrated in Figs. 5a, 5b. Both diagrams illustrate a relative number (or frequency) N of different intensity values I, for an exemplary virtual representation of a sample block or, rather the data with images on which it is based. This means that, e.g., different points or pixels in the data set have different intensity values. Typically, points or pixels corresponding to remaining material like resin have low intensity values, and points or pixels corresponding to the sample have high intensity values. Both diagrams show the same intensity value distribution.

In order to generate different view having different transparency for the remaining material and/or the sample, different ranges 550a, 550b can be used. Range 550a in Fig. 5a comprises lower intensity values, ranging from lower threshold $L_b$ to upper threshold $U_b$, which results in the sample not or almost not being visible in this view (because the intensity values corresponding to the sample are outside range 550a); this can be the first view. Range 550b in Fig. 5b comprises higher intensity values, ranging from lower threshold $L_s$ to upper threshold $U_s$, which results in the remaining material not or almost not being visible in this view (because the intensity values corresponding to the remaining material are outside range 550b); this can be the second view.

The stack of images from a volumetric acquisition can be visualized using a transparency rendering. Planes parallel to the screen or display through the stack can processed form back to front. A render buffer can be initialized with a background intensity value I. For each screen pixel, the render buffer values can then be updated to a new intensity value $I'$ by:

$$I' = I_v * f(I_v) + I * (1 - f(I_v))$$

with $I_v$ being the interpolated intensity from the plane for the screen pixel, and I being the previous intensity value of the frame buffer. A transparency function f can used, which is a linear interpolation from a lower threshold $L$ to an upper threshold $U$ of a range of intensity values to be used for the current view:

$$f(I_v) = max\left(\min(\frac{I_v - L}{U - L}, 1), 0\right).$$

As mentioned, different views - or at least two different views - can be provided. These can be generated using different a transparency setting. The thresholds $L$ and $U$ can be derived from an intensity histogram of the image stack as shown in Figs. 5a, 5b. The threshold values defining the range 550a can be, for example, defined as:

$$L_b = I_{Hmax}, \quad U_b = I_{Hmax} + 2 \cdot (t - I_{Hmax})$$

where $I_{min}$ is the minimum intensity value in the image stack, $I_{Hmax}$ is the intensity value with the highest frequency in the histogram, and t is defined as follows:

$$t = 0.75 \cdot Otsu\left(I_{min}, Otsu(I_{min}, I_{max})\right) + 0.25 \cdot Otsu(I_{min}, I_{max}).$$

The threshold values defining the range 550b can be, for example, defined as:

$$L_s = t = 0.75 \cdot Otsu\left(I_{min}, Otsu(I_{min}, I_{max})\right) + 0.25 \cdot Otsu(I_{min}, I_{max}), \quad U_s = I_{max}$$

where $I_{max}$ is the maximum intensity in the image stack. In both cases, $Otsu(I_1, I_2)$ is the result of a method by Otsu for the automatic selection of an optimal threshold for image segmentation for a histogram for the part of the histogram from intensity $I_1$ to $I_2$ described in "Nobuyuki Otsu. A threshold selection method from grey level histograms. In: IEEE Transactions on Systems, Man, and Cybernetics. New York, 9.1979, S. 62-66. ISSN 1083-4419." It is noted that other suitable ways to define the ranges, in particular, range 550b can be used. For example, a manual selection could also be possible.

Thus, the first range 550a of intensity comprises more intensity values corresponding to the remaining material and less intensity values corresponding to the sample than the second range 550b of intensity. This allows either showing mainly the remaining material in the first view and showing mainly the sample in the second view.

In an embodiment, the controller is further configured to control the display to automatically switch between the different views, based on a current task to be performed on the virtual representation of the sample block. This has already been described in relation to Figs. 3a, 4; for example, if defining the cutting plane, the second view showing the sample can automatically be used.

In an embodiment, the controller is further configured to control the display to switch between the different views in a continuous or quasi-continuous mode such the transparency of the at least one of the sample and the remaining material changes continuously or quasi-continuously. For example, further ranges can be defined like the ones above, resulting in views that show less remaining material and more of the sample when going from view to view.

Figs. 6a, 6b schematically show a display for illustrating an embodiment of the invention. Display 620 can correspond to display 120 of Fig. 1, display 320 of Fig. 3a or display 420 of Fig. 4. A user interface 622 can be rendered on display 620, e.g., by means of the controller controlling the display 620. In other words, display 620 can correspond to display 120, 320 or 420 with another user interface or, at least, another view being shown.

In an embodiment controller is configured to control a display (like display 620) to visualize a virtual representation of an object. In an embodiment, the object is a sample block. The controller is further configured to receive first positional user input data, wherein the first positional input data is indicative of a user-defined position in the virtual representation 640a of the object (see Fig. 6a), control the display to visualize an enlarged view 640b (see Fig. 6b) of the virtual representation of the object, wherein the enlarged view comprises the user-defined position. The controller is further configured to control the display to visualize, in the enlarged view, a first symbol 660 at a first position at a second position. The controller is further configured to receive second positional user input data, wherein the second positional user input data is indicative of moving a second position. The second position is different from the first position, defining a relative position between the first position and the second position. IN an embodiment, the controller can further be configured to control the display to visualize, in the enlarged view, a second symbol 662 at the second position, as illustrated in Fig. 6b. The controller is further configured to control the display to visualize the first symbol based on the second positional user input data, wherein the relative position between the first position and the second position does not change.

It is noted that the second symbol 662 illustrated in Fig. 6b can be used in order to assist the user, e.g., where to touch the display or what to do. However, visualizing the second symbol is not necessary as touching the display at the second position and performing the moving action, i.e., moving the second position, also will work without the second symbol.

As mentioned before, defining positions relating to an edge of sample block exactly can be difficult, in particular when the display is a touch display and a touch-object like a finger is used to interact with the display (or the controller, actually). Although the following particularly relates to defining positions relating to an edge of sample block, this can also be applied to other objects than sample blocks shown in the display.

The view 640a of the virtual representation of the sample block shown in Fig. 6a basically corresponds to the view (first view in this case) shown in Fig. 3a. While the user user-defined surface positions, for example, do not have to be very exact as to position, this does not hold true for the user-defined edge positions (as mentioned above).

Thus, a mode, for example, can be used for defining the user-defined edge positions implementing the embodiment described here. The first positional user input to be received can be generated by a user touching the display (if a touch-display is used) roughly near a position on the edge, see Fig. 6a by means of a finger 670 (or any other suitable touch-object). The user cannot exactly see the user-defined position 664, i.e., the actual position which the user is touching.

Based on or after this first positional user input, the display is controlled to visualize the enlarged view 640b of the virtual representation of the object, wherein the enlarged view comprises the user-defined position 664 (at or near the lower left corner of the sample block, in this case). Further, the display is controlled to visualize, in the enlarged view, a first symbol 660 at a first position and, in an embodiment, also a second symbol 662 at a second position, wherein the second position is different from the first position, defining a relative position between the first position and the second position. The first position can correspond to the user-defined position 664, for example.

While in Fig. 6b the first symbol 660 is located on an edge of the front surface of the sample block, this will most likely not be the case when the user touches the display like shown in Fig. 6a. Further, the second positional user input data is received, wherein the second positional user input data is indicative of moving the second position, e.g., via moving the second symbol 662. In order to generate the second positional user input data, the user can touch the second symbol 662 and (while still touching) move the finger 670, for example. As noted, the user can touch the display at the second position also without having the second symbol being displayed. Further, the display is controlled to visualize the first symbol 660 and, in an embodiment, also the second symbol 662, based on the second positional user input data, wherein the relative position between the first position and the second position does not change. In other words, while moving the second position or second symbol 662 the first symbol 660 is also moved. Due to the enlarged view, the user can locate the first symbol 660 very exactly on the edge (or wherever it is to be located).

In an embodiment, the second positional user input data is generated by moving the touch-object touching the touch display at a pre-defined area outside the first symbol. In other words, only when the pre-defined area, e.g., he second symbol (or, e.g., within a certain area like within a 1cm margin from the symbol) is touched, the moving operating can be performed. Touching the display outside the pre-defined area will, for example, not allow moving the first symbol.

In an embodiment, third positional user input data can be received, wherein the third positional user input data is indicative of a final user-defined position in the virtual representation of the object, wherein the final user-defined position corresponds to the first position after moving the second position. This final user-defined position can be, for example, the position of the first symbol 660 shown in Fig. 6b, i.e. the position the user actually wants to define.

In an embodiment, after the final user-defined position has been determined, the view prior to the enlarged view can be shown again, e.g., in order to allow further positions to be defined in the same way.

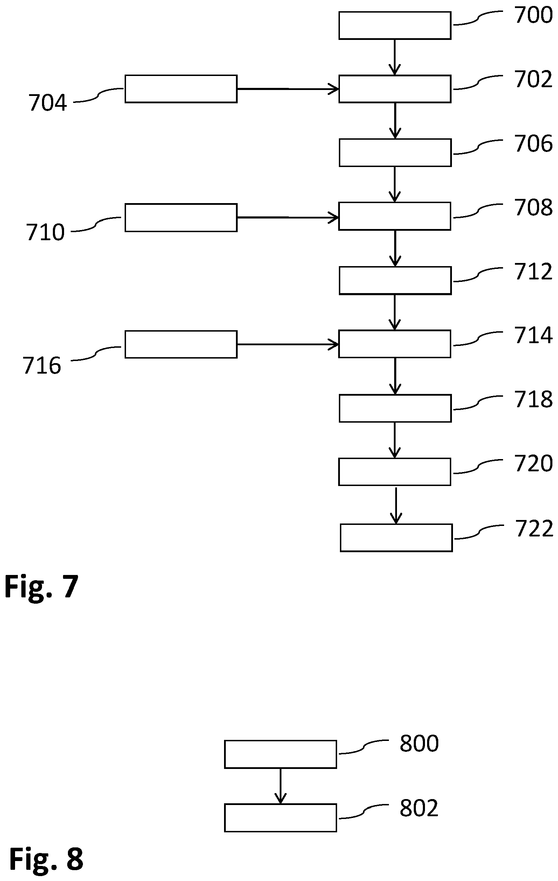

Fig. 7 schematically illustrates a method according to an embodiment of the invention in a flow diagram. The method is for obtaining alignment parameters for a microtome, wherein the microtome is configured to cut slices from a sample block by means of a knife. For example, a microtome or a microtome system as described in any of the embodiments above can be used.

The method comprises the following steps. In a step 700, a display is controlled to visualize a virtual representation of the sample block; for example, a virtual representation as shown in Fig. 3a can be shown on the display. In a step 702, first user input data 704 is received; the first user input data 704 is indicative of a front surface of the sample block in the virtual representation of the sample block, as described with respect to Fig. 3a, for example. In a step 706, a virtual front surface of the sample block is determined, based on the first user input data 704.

In a step 708, second user input data 710 is received; the second input data 710 is indicative of an edge of the front surface of the sample block in the virtual representation of the sample block, as described with respect to Fig. 3a, for example. In a step 712, a virtual edge of the front surface of the sample block is determined, based on the second user input data 710, as described with respect to Fig. 3a, for example.

In a step 714, third user input data 716 is received; the third user input data 716 is indicative of a cutting plane intersecting the sample block in the virtual representation of the sample block, as described with respect to Fig. 4, for example. In a step 718, a virtual cutting plane intersecting the sample block is determined, based on the third user input data 716, as described with respect to Fig. 4, for example.

In a step 720, alignment parameters for the microtome are determined, based on the virtual front surface of the sample block, the virtual edge of the front surface of the sample block, and the virtual cutting plane; The alignment parameters define a relation between the virtual cutting plane, the virtual front surface of the sample block and the virtual edge of the front surface of the sample block, as described with respect to Fig. 4, for example.

In an embodiment, in a step 722, the microtome can be controlled to align the sample block with the knife, according to the alignment parameters, after the sample block has been pre-aligned with the knife in the microtome, based on a real front surface of the sample block and a real edge of the front surface of the sample block.

Further steps or further embodiments of the method correspond to the embodiments described in relation to the microtome system above.

Fig. 8 schematically illustrates a method according to an embodiment of the invention in a flow diagram. The method is for visualizing a sample block, wherein the sample block comprises a sample and remaining material. The sample block can be intended to be cut by means of a microtome that is configured to cut slices from the sample block by means of a knife. For example, a microtome or a microtome system as described in any of the embodiments above can be used.

The method comprises the following steps: In a step 800, a display is controlled to visualize a virtual representation of the sample block in different views, as described with respect to Figs. 3a and 4, for example. At least one of the sample and the remaining material has a different transparency in the different views. In a step 802, the display is controlled to switch between the different views, as described with respect to Figs. 3a and 4 with switching from the view of Fig. 3a to the view of Fig. 4, for example.

Further steps or further embodiments of the method correspond to the embodiments described in relation to the microtome system above.

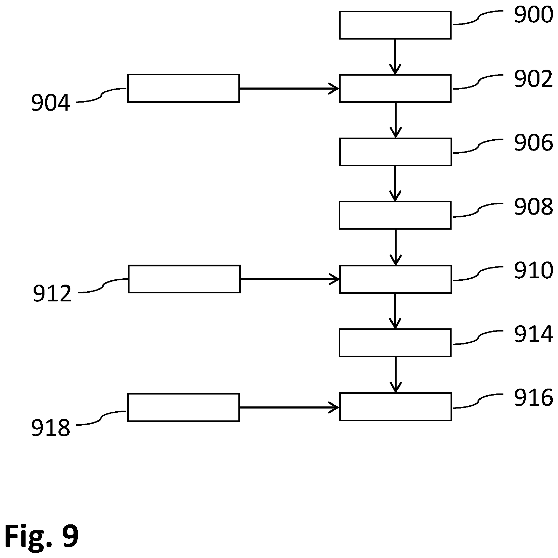

Fig. 9 schematically illustrates a method according to an embodiment of the invention in a flow diagram. The method is for defining a position at an object. In an embodiment, the object is a sample block intended to be cut by means of a microtome that is configured to cut slices from the sample block by means of a knife. For example, a microtome or a microtome system as described in any of the embodiments above can be used.

The method comprises the following steps: In a step 900, a display is controlled to visualize a virtual representation of an object, as described with respect to Fig. 6a, for example. In a step 902, first positional user input data 904 is received; the first positional input data 904 is indicative of a user-defined position in the virtual representation of the object, as described with respect to Fig. 6a, for example.

In a step 906, the display is controlled to visualize an enlarged view of the virtual representation of the object, wherein the enlarged view comprises the user-defined position, as described with respect to Fig. 6b, for example. In a step 908, the display is controlled to visualize, in the enlarged view, a first symbol at the first position and a second symbol at a moving position. The moving position is different from the first position, defining a relative position between the first symbol and the second symbol, as described with respect to Fig. 6b, for example.

In a step 910, second positional user input data 912 is received; the second user input data is indicative of moving the second symbol, as described with respect to Fig. 6b, for example. In a step 914, the display is controlled to visualize the first symbol and the second symbol based on the second user input data, wherein the relative position between the first symbol and the second symbol does not change, as described with respect to Fig. 6b, for example.

In an embodiment, in step 916, third positional user input data 918 received; the third positional user input data 918 is indicative of a final user-defined position in the virtual representation of the object. The final user-defined position corresponds to the first position after moving the second symbol, as described with respect to Fig. 6b, for example.

As used herein the term "and/or" includes any and all combinations of one or more of the associated listed items and may be abbreviated as "f".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some embodiments relate to a microtome comprising a system as described in connection with one or more of the Figs. 1 to 9. Alternatively, a microtome may be part of or connected to a system as described in connection with one or more of the Figs. 1 to 9. Fig. 1 shows a schematic illustration of a system 100 configured to perform a method described herein. The system 100 comprises a microtome 130 and a computer system or controller 110. The microtome is connected to the computer system 110. The computer system 110 is configured to execute at least a part of a method described herein. The computer system 110 may be configured to execute a machine learning algorithm. The computer system 110 and microtome 130 may be separate entities but can also be integrated together in one common housing. The computer system 110 may be part of a central processing system of the microtome 130 and/or the computer system 110 may be part of a subcomponent of the microtome 130, such as a sensor, an actor, a camera or an illumination unit, etc. of the microtome 130.

The computer system 110 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 110 may comprise any circuit or combination of circuits. In one embodiment, the computer system 110 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microtome or a microtome component (e.g. camera) or any other type of processor or processing circuit. Other types of circuits that may be included in the computer system 110 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 110 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 110 may also include a display device, one or more speakers, and a keyboard and/or controller, which can include a mouse, trackball, touch screen, voice-recognition device, or any other device that permits a system user to input information into and receive information from the computer system 110.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

**List of Reference Signs**

| | |
|---|---|
| 100 | microtome system |
| 110 | controller |
| 120, 320, 420, 620 | display |
| 130, 230 | microtome |
| 131 | eyepiece |
| 132, 232 | knife |
| 134, 234 | knife holder |
| 136, 236 | sample holder |
| 138.1, 138.2 | actor |
| 138.3 | drive |
| 140, 240 | sample block |

| | |
|---|---|
| 242 | front surface of sample block |
| 244 | edge of front surface |
| 246 | sample |
| 248 | remaining material |
| 250 | cutting plane |

| | |
|---|---|
| 322, 422, 622 | user interface |
| 324.1 - 24.6, 424.1 - 424.8 | Input means |
| 340 | virtual representation of sample block in first view |
| 342 | virtual front surface |
| 342.1 - 342.3 | user-defined surface positions |
| 342.1' | surface position |
| 344.1, 344.2 | user-defined edge positions |
| 344 | virtual edge |
| 348 | remaining material in virtual representation |

| | |
|---|---|
| 440 | virtual representation of sample block in second view |
| 446 | sample in virtual representation |
| 450 | virtual cutting plane |
| 550a | first range of intensity values |
| 550b | second range of intensity values |

| | |
|---|---|
| 640a | virtual representation of sample block |
| 640b | virtual representation of sample block in enlarged view |
| 660 | first symbol |
| 662 | second symbol |

| 664 | first position |
| 670 | touch-object |

| 700, 702, 706, 708, 712, 714, 718, 720, 722 | method steps |
| 704 | first user input data |
| 710 | second user input data |
| 716 | third user input data |

| 800, 802 | method steps |

| 900, 902, 906, 908, 912, 914, 916 | method steps |

| 904 | first positional user input data |
| 910 | second positional user input data |
| 918 | third positional user input data |

| D | pre-defined direction |
| I | intensity |
| $L_b, L_s$ | lower threshold |
| R | cutting direction |
| $U_b, U_s$ | upper threshold |
| x, y, z | coordinate axes |
| $\theta_t, \theta_r, \theta_k$ | angles of microtome |
| $\theta_p, \theta_s, \theta_y, z$ | cutting parameters |

**Claims**

1. A controller (110) for a microtome (130), wherein the microtome (130) is configured to cut slices from a sample block (140, 240) by means of a knife (132), wherein said controller (110) is configured to:

   Control a display (120, 320, 420) to visualize a virtual representation (340, 440) of the sample block,
   Receive first user input data (704), wherein the first user input data is indicative of a front surface (242) of the sample block in the virtual representation of the sample block,
   Determine a virtual front surface (342) of the sample block based on the first user input data,
   Receive second user input data (710), wherein the second input data is indicative of an edge (244) of the front surface of the sample block in the virtual representation (340) of the sample block,
   Determine a virtual edge (344) of the front surface of the sample block based on the second user input data,
   Receive third user input data (716), wherein the third user input data is indicative of a cutting plane (250) intersecting the sample block in the virtual representation of the sample block,
   Determine a virtual cutting plane (450) intersecting the sample block, based on the third user input, and
   Determine alignment parameters for the microtome (130), based on the virtual front surface (342) of the sample block, the virtual edge (344) of the front surface of the sample block, and the virtual cutting plane (450), wherein the alignment parameters define a relation between the virtual cutting plane, the virtual front surface of the sample block and the virtual edge of the front surface of the sample block.

2. The controller (110) of claim 1, further configured to:

   Control the microtome (130) to align the sample block (140, 240) with the knife (132), according to the alignment parameters, after the sample block has been pre-aligned with the knife in the microtome, based on a real front surface of the sample block and a real edge of the front surface of the sample block, or
   Provide user instructions about how to align the sample block with the knife, according to the alignment parameters, after the sample block has been pre-aligned with the knife in the microtome, based on a real front surface of the sample block and a real edge of the front surface of the sample block.

3. The controller (110) of claim 1 or 2, wherein the first user input data comprises data relating to three different user-defined surface positions (342.1, 342.2, 342.3), wherein each of the three different user-defined surface positions is indicative of a front surface (242) of the sample block in the virtual representation of the sample block.

4. The controller (110) of claim 3, wherein determining the virtual front surface (342) of the sample block based on the first user input data comprises:

Determining, for each of the three different user-defined surface positions (342.1, 342.2, 342.3), a surface position on a sample surface within the virtual representation of the sample block, based on intensity information of the virtual representation of the sample block, and
Determining the virtual front surface (342) of the sample block based on the surface positions on the sample surface.

5. The controller (110) of claim 4, wherein determining, for each of the three different user-defined surface positions (342.1, 342.2, 342.3), the surface position on the sample surface within the virtual representation of the sample block, based on intensity information of the virtual representation of the sample block, comprises:

Determining a threshold position, wherein the threshold position is a first position along a pre-defined direction having an intensity value greater than a pre-defined threshold in the virtual representation of the sample block, wherein the pre-defined direction is based on the user-defined position, and
Using the threshold position as the surface position on the sample surface.

6. The controller (110) of any one of the preceding claims, wherein the second user input data comprises data relating to two different user-defined edge positions (344.1, 344.2) in a front surface plane, wherein the front surface plane is a plane of the virtual front surface (342) of the sample.

7. The controller (110) of any one of the preceding claims, wherein the third user input data comprises data relating to a user-defined value of at least one cutting parameter, wherein the at least one cutting parameter defines a relation between the cutting plane (250) and the virtual representation (340) of the sample block, wherein, preferably, the at least one cutting parameter comprises at least one of the following: a pitch angle, a yaw angle, a rotation angle, and a lateral position.

8. The controller (110) of claim 7, further configured to:

Receive a current value for the at least one cutting parameter, and
Control the display to visualize a current virtual cutting plane in the virtual representation of the sample block, based on the current value for the at least one cutting parameter.

9. The controller (110) of any one of the preceding claims, wherein the sample block (140, 240) comprises a sample (246) and remaining material (248), wherein the controller is further configured to:

Control the display (120, 320, 430) to visualize the virtual representation (340, 440) of the sample block in different views,
Wherein at least one of the sample (446) and the remaining material (348) has a different transparency in the different views (340, 440), and
Control the display (120, 320, 420) to switch between the different views.

10. The controller (110) of claim 9, wherein the different views comprise a first view (340) and a second view (440),

wherein, in the first view (340), the remaining material (348) in the virtual representation of the sample block is less transparent than in the second view, and
wherein, in the second view (440), the sample (446) in the virtual representation of the sample block is less transparent than the remaining material,
wherein, preferably, in the first view, the virtual representation of the sample block comprises a bigger fraction of the remaining material and a smaller fraction of the sample than in the second view.

11. The controller (110) of claim 10, further configured to at least one of:

Control the display (120, 320, 420) to visualize the virtual representation of the sample block in the first view (340) in order to allow generating at least one of the first user input data and the second user input data; and
Control the display to visualize the virtual representation of the sample block in the second view (440) in order to allow generating the third user input data.

**12.** The controller of any one of claims 9 to 11, wherein the virtual representation of the sample block is based on multiple images, wherein the controller is configured to:

Control the display to visualize the virtual representation of the sample block based on an intensity of the multiple images,
wherein, in the different views, the virtual representation of the sample block is based on different ranges (550a, 550b) of intensity values of the multiple images.

**13.** The controller of claim 12, wherein the different ranges of intensity comprise a first range (550a) of intensity and a second range (550b) of intensity, and
wherein the first range (550a) of intensity comprises more intensity values corresponding to the remaining material and less intensity values corresponding to the sample than the second range (550b) of intensity.

**14.** The controller of any one of claims 9 to 13, further configured to:
Control the display to automatically switch between the different views, based on a current task to be performed on the virtual representation of the sample block.

**15.** The controller of any one of the preceding claims, further configured to:

Control the display (620) to visualize a virtual representation (640a, 640b) of the sample block,
Receive first positional user input data, wherein the first positional input data is indicative of a user-defined position in the virtual representation (640a) of the sample block,
Control the display to visualize an enlarged view (640b) of the virtual representation of the sample block, wherein the enlarged view comprises the user-defined position,
Control the display to visualize, in the enlarged view, a first symbol (660) at a first position,
Receive second positional user input data, wherein the second positional user input data is indicative of moving a second position, wherein the second position is different from the first position, defining a relative position between the first position and the second position, and
Control the display to visualize the first symbol based on the second positional user input data, wherein the relative position between the first position and the second position does not change.

**16.** The controller of claim 15, wherein the display is or comprises a touch display,

wherein the second positional user input data is received from the touch display, and
wherein the second positional user input data is generated by moving a touch-object touching the touch display.

**17.** The controller of claim 16, wherein the second positional user input data is generated by moving the touch-object touching the touch display at a pre-defined area outside the first position.

**18.** A microtome system (100) comprising a microtome, a display and the controller of any one of the preceding claims, wherein the microtome is configured to cut slices from the sample block by means of the knife.

**19.** A method for obtaining alignment parameters for a microtome (130), wherein the microtome is configured to cut slices from a sample block by means of a knife, comprising the following steps:

Controlling (700) a display to visualize a virtual representation of the sample block,
Receiving (702) first user input data (704), wherein the first user input (704) data is indicative of a front surface of the sample block in the virtual representation of the sample block,
Determining (706) a virtual front surface of the sample block based on the first user input data (704),
Receiving (708) second user input data (710), wherein the second input data (710) is indicative of an edge of the front surface of the sample block in the virtual representation of the sample block,
Determining (712) a virtual edge of the front surface of the sample block based on the second user input data (710),
Receiving (714) third user input data (716), wherein the third user input data is indicative of a cutting plane intersecting the sample block in the virtual representation of the sample block,
Determining (718) a virtual cutting plane intersecting the sample block, based on the third user input, and
Determining (720) alignment parameters for the microtome, based on the virtual front surface of the sample block, the virtual edge of the front surface of the sample block, and the virtual cutting plane, wherein the alignment parameters define a relation between the virtual cutting plane, the virtual front surface of the sample block and the virtual edge of the front surface of the sample block.

**Fig. 1**

Fig. 2a

**Fig. 2b**

**Fig. 3a**

**Fig. 3b**

**Fig. 4**

N

I

$L_b$   550a   $U_b$

**Fig. 5a**

N

I

$L_s$   550b   $U_s$

**Fig. 5b**

**Fig. 6a**

**Fig. 6b**

**Fig. 7**

**Fig. 8**

900

904 → 902

906

908

912 → 910

914

918 → 916

**Fig. 9**

Europäisches
Patentamt

European
Patent Office

Office européen
des brevets

# EUROPEAN SEARCH REPORT

Application Number

EP 22 21 6638

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/028667 A1 (SPRUCK BERND [DE] ET AL) 30 January 2014 (2014-01-30) | 1-4,6-19 | INV.<br>G01N1/06 |
| A | * paragraph [0088] *<br>* paragraph [0091] *<br>* paragraph [0095] – paragraph [0101] *<br>* paragraph [0118] *<br>* paragraph [0119] *<br>* paragraph [0120] *<br>* figure 8 *<br>* figure 11 *<br>* figure 12 * | 5 | G06T1/00 |
| A | RU 2 173 480 C2 (TERPILOVSKII A A) 10 September 2001 (2001-09-10)<br>* abstract *<br>* figure 2 * | 1-19 | |
| A | US 6 634 268 B1 (GUENTHER BERND [DE] ET AL) 21 October 2003 (2003-10-21)<br>* abstract *<br>* figure 1 * | 1-19 | |
| A | US 2022/338938 A1 (WALEN JAMES G [US] ET AL) 27 October 2022 (2022-10-27)<br>* paragraph [0051] *<br>* paragraph [0058] * | 1-19 | TECHNICAL FIELDS SEARCHED (IPC)<br><br>G01N<br>G06T |

The present search report has been drawn up for all claims

| Place of search | Date of completion of the search | Examiner |
|---|---|---|
| The Hague | 26 May 2023 | Traversa, Marzia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 6638

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2023

| Patent document cited in search report | | Publication date | Patent family member(s) | | Publication date |
|---|---|---|---|---|---|
| US 2014028667 | A1 | 30-01-2014 | DE 102012106890 | A1 | 30-01-2014 |
| | | | US 2014028667 | A1 | 30-01-2014 |
| RU 2173480 | C2 | 10-09-2001 | | | |
| US 6634268 | B1 | 21-10-2003 | CA 2331520 | A1 | 14-09-2000 |
| | | | CN 1302374 | A | 04-07-2001 |
| | | | DE 19911005 | A1 | 28-09-2000 |
| | | | EP 1080358 | A2 | 07-03-2001 |
| | | | JP 2002539424 | A | 19-11-2002 |
| | | | US 6634268 | B1 | 21-10-2003 |
| | | | WO 0054020 | A2 | 14-09-2000 |
| US 2022338938 | A1 | 27-10-2022 | AU 2020356641 | A1 | 12-05-2022 |
| | | | CA 3155848 | A1 | 01-04-2021 |
| | | | CN 114746043 | A | 12-07-2022 |
| | | | EP 4034020 | A2 | 03-08-2022 |
| | | | JP 2022549511 | A | 25-11-2022 |
| | | | US 2022338938 | A1 | 27-10-2022 |
| | | | WO 2021062373 | A2 | 01-04-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NOBUYUKI OTSU.** A threshold selection method from grey level histograms. *IEEE Transactions on Systems, Man, and Cybernetics. New York,* 1979, vol. 9, ISSN 1083-4419, 62-66